# EUROPEAN PATENT APPLICATION

(11) **EP 4 541 492 A1**
(43) Date of publication of application: **23.04.2025**
(21) Application number: 24174661.9
(22) Date of filing: 07.05.2024
(51) Int. Cl.: B23D 53/00, B23D 53/12, B27B 15/02, B62B 5/02

(54) **SAWMILL CARRIAGE, SAWMILL CARRIAGE KIT, AND METHOD OF USING SAME**

(30) Priority: 08.05.2023 CA 3199071
(71) Applicant: Norwood Industries Inc., Oro-Medonte, Ontario L0L 1T0 (CA)
(72) Inventor: CABRIT, Sebastian, Oro-Medonte Ontario LOL 1T0 (CA); VANDERHEYDEN, Daniel, Oro-Medonte Ontario LOK 1N0 (CA)
(74) Representative: Reddie & Grose LLP

(57) **Abstract**

A sawmill carriage (20) includes a frame (24) having a handle (60), translation structures connected to the frame (24) towards lateral sides (LS) thereof, a sawmill head (28), and a pair of transportation wheels (88) rotatably connected to the frame (24) towards a longitudinal end (RLE) thereof. The translation structures are mountable on rails (92) of a log support structure (96) that can support a log (100). The rails (92) extend in a longitudinal direction (LD) and enable travel of the sawmill carriage (20) in the longitudinal direction (LD) when the sawmill carriage (20) is mounted thereon. The sawmill head (28) has a saw blade (64), a portion of which is positionable to cut the log (100) positioned on the log support structure (96) when the sawmill carriage (20) is mounted on the rails (92), and the sawmill carriage (20) travels in the longitudinal direction (LD). The handle (60) is positioned to enable tilting and/or transportation of the sawmill carriage (20). A kit and method of using the sawmill carriage (20) are also provided.

## Description

### Technical Field

The present disclosure relates generally to sawmills. In particular, the present disclosure relates to a sawmill carriage, a sawmill carriage kit, and a method of using the same.

### Background

Transportation of trees to be processed is costly, dangerous, and labor intensive. It is desirable to locate sawmills close to felled trees so that they can be processed before transportation. Currently, transportation entails positioning a log support structure close to the felled trees, by mounting an entire sawmill on a trailer structure. The resultant sawmill-trailer has drawbacks in that it is difficult to pull through wooded areas, and is a large and awkward structure to store or transport, e.g. by plane or boat.

The alternative is to transport the individual parts of the mill separately, then mounting a frame to the log support structure, and securing a sawmill head to a frame to receive logs to saw them into planks. When it is desired to move the sawmill to another location, the sawmill head must be unsecured from the frame, the frame is dismounted from the log support structure, and the sawmill head, the log support structure, and the frame are moved to the new location and reassembled. This process of moving the sawmill is time consuming and can lead to injury for the workers that are performing these tasks due to the weight and cumbersomeness of the components.

Thus, there is a need for an improved sawmill that is more readily transportable.

### Summary

The present disclosure describes systems and methods which provide one or more efficient techniques to perform.

In accordance with a first aspect of the present disclosure, there is provided a sawmill carriage, comprising: a frame having a handle; a first translation structure connected to the frame towards a first lateral side thereof, and a second translation structure connected to the frame towards a second lateral side thereof opposite the first lateral side, the first translation structure being configured to be mounted on a first rail of a log support structure, the second translation structure being configured to be mounted on a second rail of the log support structure, the log support structure being configured to support a log, the first rail and the second rail extending in a longitudinal direction and enabling travel of the sawmill carriage in the longitudinal direction when the first translation structure and the second translation structure are mounted on the first rail and the second rail, respectively; a sawmill head secured to the frame, the sawmill head having a saw blade, a portion of the saw blade being positionable to cut the log positioned on the log support structure when the first translation structure and the second translation structure are mounted on the first rail and the second rail, respectively, and the sawmill carriage travels in the longitudinal direction; and a pair of transportation wheels rotatably connected to the frame towards a longitudinal end thereof, wherein the handle is positioned to enable tilting and/or transportation of the sawmill carriage when the sawmill carriage is resting on the pair of transportation wheels.

In some or all examples of the first aspect, the first translation structure includes a first pair of track wheels rotatably connected to the frame, and the second translation structure includes a second pair of track wheels rotatably connected to the frame, and wherein each of the first rail and the second rail have at least a planar surface upon which the first pair of track wheels and the second pair of track wheels are mountable, respectively.

In some or all examples of the first aspect, the first translation structure includes a first slide member, and the second translation structure includes a second slide member, and wherein each of the first rail and the second rail has at least a planar surface upon which the first slide member and the second slide member are mountable, respectively.

In some or all examples of the first aspect, the longitudinal end of the frame is a first longitudinal end, and wherein at least one of each of the first pair of track wheels and at least one of the second pair of track wheels is positioned towards a second longitudinal end of the frame opposite the first longitudinal end.

In some or all examples of the first aspect, a retainer structure is positioned or positionable along the frame along a span of a longitudinal axis along which the first translation structure and the second translation structure contact the first rail and the second rail, respectively, to abut a stop connected to the first rail and/or the second rail to inhibit accidental dismounting of the sawmill carriage from the log support structure when the sawmill carriage is mounted on the log support structure.

In some or all examples of the first aspect, the retainer structure includes a first L-shaped bracket positioned towards the first lateral side of the frame and a second L-shaped bracket positioned towards the second lateral side of the frame.

In some or all examples of the first aspect, the first L-shaped bracket and the second L-shaped bracket are removably coupled to the frame.

In some or all examples of the first aspect, a spacing between the pair of transportation wheels is greater than a width of a combination of the first rail and the second rail.

In some or all examples of the first aspect, the frame includes a pair of plate members towards the first lateral side thereof between which the first pair of track wheels is rotatably mounted.

In some or all examples of the first aspect, the handle is positioned towards the longitudinal end of the frame.

In accordance with a second aspect of the disclosure, there is provided a sawmill carriage kit for a sawmill carriage, comprising: a frame having a handle; a first translation structure connected or connectable to the frame towards a first lateral side thereof, and a second translation structure connected or connectable to the frame towards a second lateral side thereof opposite the first lateral side, the first translation structure being configured to be mounted on a first rail of a log support structure when connected to the frame and the second translation structure being configured to be mounted on a second rail of the log support structure when connected to the frame, the log support structure being configured to support a log, the first rail and the second rail extending in a longitudinal direction and enabling travel of the sawmill carriage in the longitudinal direction when the first translation structure and the second translation structure are mounted on the first rail and the second rail, respectively; a sawmill head of the sawmill carriage secured or securable to the frame, the sawmill head having a saw blade, a portion of the saw blade being positionable to cut the log positioned on the log support structure when the first translation structure and the second translation structure are mounted on the first rail and the second rail, respectively, and the sawmill carriage travels in the longitudinal direction; and a pair of transportation wheels rotatably connected or connectable to the frame towards a longitudinal end thereof, wherein the handle is positioned to enable tilting and/or transportation of the sawmill carriage when the sawmill carriage is resting on the pair of transportation wheels.

In some or all examples of the second aspect, the first translation structure includes a first pair of track wheels rotatably connected or connectable to the frame, and the second translation structure includes a second pair of track wheels rotatably connected or connectable to the frame, and wherein each of the first rail and the second rail have at least a planar surface upon which the first pair of track wheels and the second pair of track wheels are mountable, respectively, when the sawmill carriage is assembled.

In some or all examples of the second aspect, the first translation structure includes a first slide member, and the second translation structure includes a second slide member, wherein each of the first rail and the second rail has at least a planar surface upon which the first slide member and the second slide member are mountable, respectively.

In some or all examples of the second aspect, the longitudinal end of the frame is a first longitudinal end, and wherein at least one of each of the first pair of track wheels and at least one of the second pair of track wheels is positioned or positionable towards a second longitudinal end of the frame opposite the first longitudinal end.

In some or all examples of the second aspect, a retainer structure is positioned or positionable along the frame along a span of a longitudinal axis along which the first translation structure and the second translation structure contact the first rail and the second rail, respectively, to abut a stop connected to the first rail and/or the second rail to inhibit accidental dismounting of the sawmill carriage from the log support structure when the sawmill carriage is mounted on the log support structure.

In some or all examples of the second aspect, the retainer structure includes a first L-shaped bracket positioned or positionable towards the first lateral side of the frame and a second L-shaped bracket positioned or positionable towards the second lateral side of the frame.

In some or all examples of the second aspect, the first L-shaped bracket and the second L-shaped bracket are removably coupled or coupleable to the frame.

In some or all examples of the second aspect, a spacing between the pair of transportation wheels, when rotatably connected to the frame, is greater than a width of a combination of the first rail and the second rail.

In some or all examples of the second aspect, the frame includes a pair of plate members towards the first lateral side thereof between which the first pair of track wheels is rotatably mounted.

In some or all examples of the second aspect, the handle is positioned towards the longitudinal end of the frame.

In accordance with a third aspect of the disclosure, there is provided a method of using a sawmill carriage, comprising: rolling the sawmill carriage via a handle of a frame of the sawmill carriage on a pair of transportation wheels rotatably connected to the frame, the handle and the pair of transportation wheels being positioned towards a longitudinal end of the frame, the sawmill carriage having a first translation structure connected to the frame towards a first lateral side thereof, the sawmill carriage having a second translation structure connected to the frame towards a second lateral side thereof opposite the first lateral side, the sawmill carriage having a sawmill head secured to the frame, the sawmill head having a saw blade, a portion of the saw blade being exposed and positioned to cut a log positioned on a log support structure when the first translation structure and the second translation structure are mounted on a first rail and a second rail of the log support structure, respectively, the first rail and the second rail extending in a longitudinal direction to enable travel of the sawmill carriage in the longitudinal direction when the first translation structure and the second translation structure are mounted on the first rail and the second rail, respectively; and tilting the sawmill carriage via the handle to mount the first translation structure and the second translation structure on the first rail and the second rail, respectively.

In some or all examples of the third aspect, the longitudinal end is a first longitudinal end, and wherein the frame includes a first track sweeper and a second track sweeper, the first track sweeper and the second track sweeper being positioned towards a second longitudinal end of the frame opposite the first longitudinal end to guide the first translation structure and the second translation structure on or onto the first rail and the second rail, and wherein tiling the sawmill carriage includes positioning the first track sweeper on the first rail and positioning the second track sweeper on the second rail.

In some or all examples of the third aspect, the first translation structure includes a first pair of track wheels rotatably connected to the frame, and the second translation structure includes a second pair of track wheels rotatably connected to the frame, and wherein each of the first rail and the second rail have at least a planar surface upon which the first pair of track wheels and the second pair of track wheels are mountable, respectively.

In some or all examples of the third aspect, the longitudinal end of the frame is a first longitudinal end, and wherein at least one of each of the first pair of track wheels and at least one of the second pair of track wheels is positioned towards a second longitudinal end of the frame opposite the first longitudinal end.

In some or all examples of the third aspect, the frame includes a pair of plate members towards the first lateral side thereof between which the first pair of track wheels is rotatably mounted.

In some or all examples of the third aspect, the first translation structure includes a first slide member, and the second translation structure includes a second slide member, wherein each of the first rail and the second rail has at least a planar surface upon which the first slide member and the second slide member are mountable, respectively.

In some or all examples of the third aspect, a retainer structure is positioned or positionable along the frame along a span of a longitudinal axis along which the first translation structure and the second translation structure contact the first rail and the second rail, respectively, to abut a stop connected to the first rail and/or the second rail to inhibit accidental dismounting of the sawmill carriage from the log support structure when the sawmill carriage is mounted on the log support structure.

In some or all examples of the third aspect, the retainer structure includes a first L-shaped bracket positioned or positionable towards the first lateral side of the frame and a second L-shaped bracket positioned or positionable towards the second lateral side of the frame.

In some or all examples of the third aspect, the first L-shaped bracket and the second L-shaped bracket are removably coupled to the frame.

In some or all examples of the third aspect, the method further comprises coupling the retainer structure to the frame upon mounting the sawmill carriage on the first rail and the second rail.

In some or all examples of the third aspect, a spacing between the pair of transportation wheels is greater than a width of a combination of the first rail and the second rail.

Other aspects and features of the present disclosure will become apparent to those of ordinary skill in the art upon review of the following description of specific implementations of the application in conjunction with the accompanying figures.

### Brief Description of the Drawings

Reference will now be made, by way of example, to the accompanying drawings which show example embodiments of the present application, and in which:
FIG. 1 is a front, top, right side perspective view of a sawmill carriage in accordance with an exemplary embodiment.
FIG. 2 is a side elevation view of the sawmill carriage of FIG. 1.
FIG. 3 is a top plan view of the sawmill carriage of FIG. 1.
FIG. 4 is a front, top, left side perspective view of the sawmill carriage of FIG. 1.
FIG. 5 is a front elevation view of the sawmill carriage of FIG. 1.
FIG. 6 is a rear elevation view of the sawmill carriage of FIG. 1.
FIG. 7 is a rear, top, right side perspective view of the sawmill carriage of FIG. 1.
FIG. 8 is a bottom view of the sawmill carriage of FIG. 1.
FIG. 9A shows the sawmill carriage of FIGS. 1 to 8 resting on transportation wheels and brackets.
FIG. 9B shows the sawmill carriage of FIGS. 1 to 8 being manually tilted so that its frame is positioned on the transportation wheels.
FIG. 9C shows the sawmill carriage of FIGS. 1 to 8 being manually moved to position a front pair of track wheels on rails of a log support structure.
FIG. 9D shows the sawmill carriage of FIGS. 1 to 8 being manually pivoted about the front pair of track wheels to align the rest brackets to receive the rails.
FIG. 9E shows the sawmill carriage of FIGS. 1 to 8 being manually translated so that the rear pair of track wheels are on the rails of the log support structure.
FIG. 9F shows the sawmill carriage of FIGS. 1 to 8 being manually translated along the rails via the track wheels.
FIG. 10 is a section view of the sawmill carriage of FIGS. 1 to 8 mounted on a log support structure.
FIG. 11 is a flowchart of a general method of using the sawmill carriage of FIGS. 1 to 8.
FIG. 12A shows the sawmill carriage of FIGS. 1 to 8 resting on transportation wheels and plate members of the frame of the sawmill carriage.
FIG. 12B shows the sawmill carriage of FIGS. 1 to 8 being manually tilted so that its frame is positioned on the transportation wheels.
FIG. 12C shows the sawmill carriage of FIGS. 1 to 8 being manually moved to position a front pair of track wheels on rails of a log support structure.
FIG. 12D shows the sawmill carriage of FIGS. 1 to 8 being manually pivoted about the front pair of track wheels so that the rear pair of track wheels can be mounted on the rails.
FIG. 12E shows the sawmill carriage of FIGS. 1 to 8 being manually translated so that the rear pair of track wheels are on the rails of the log support structure.
FIG. 12F shows the sawmill carriage of FIGS. 1 to 8 being manually translated along the rails via the track wheels.
FIG. 13 shows a sawmill carriage in accordance with another exemplary embodiment.

Similar reference numerals may have been used in different figures to denote similar components. Unless otherwise specifically noted, articles depicted in the drawings are not necessarily drawn to scale.

### Detailed Description of Example Embodiments

The present disclosure is made with reference to the accompanying drawings, in which embodiments are shown. However, many different embodiments may be used, and thus the description should not be construed as limited to the embodiments set forth herein. Rather, these embodiments are provided so that this application will be thorough and complete. Wherever possible, the same reference numbers are used in the drawings and the following description to refer to the same elements, and prime notation is used to indicate similar elements, operations, or steps in alternative embodiments. Separate boxes or illustrated separation of functional elements of illustrated systems and devices does not necessarily require physical separation of such functions, as communication between such elements may occur without any such physical separation. As such, functions need not be implemented in physically or logically separated platforms, although such functions are illustrated separately for ease of explanation herein. Different devices may have different designs. Lastly, elements referred to in the singular may be plural and vice versa, except wherein indicated otherwise either explicitly or inherently by context.

Disclosed herein is a sawmill carriage having a pair of transportation wheels that facilitate transportation of the sawmill carriage and mounting and dismounting of the sawmill carriage on rails of a log support structure configured to support a log to be cut by the sawmill carriage 20.

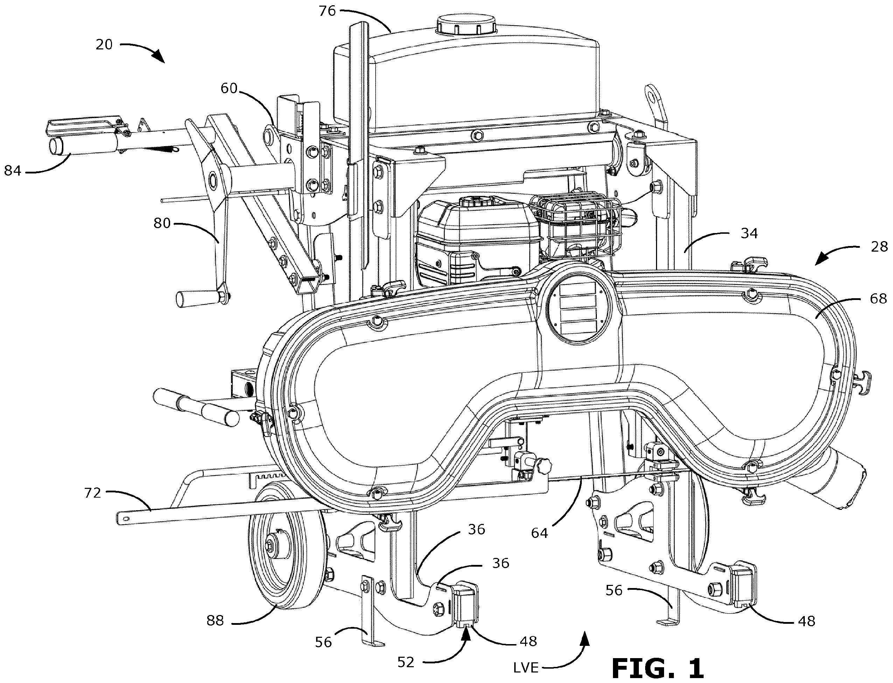

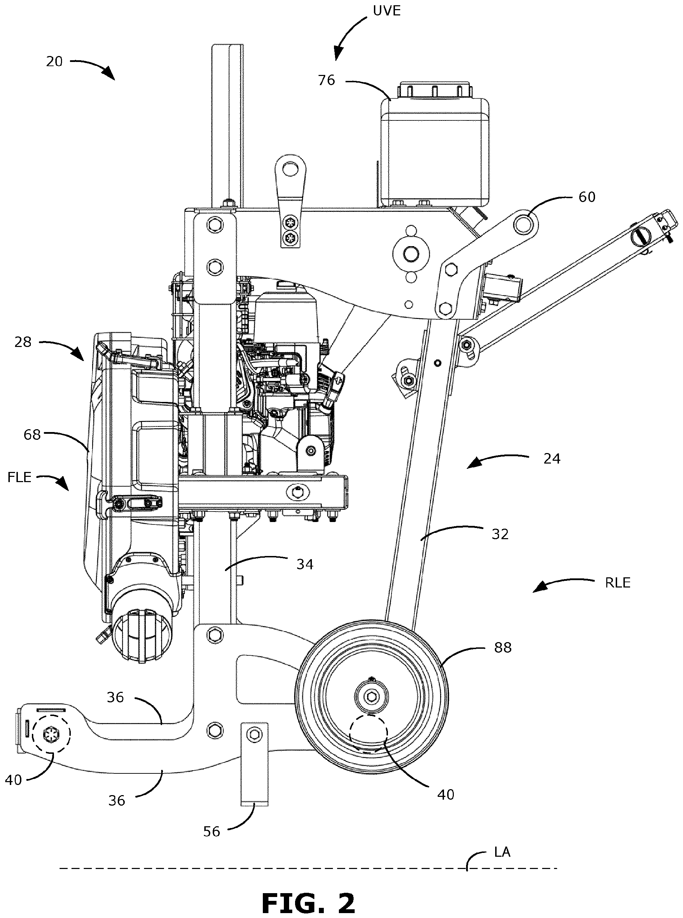

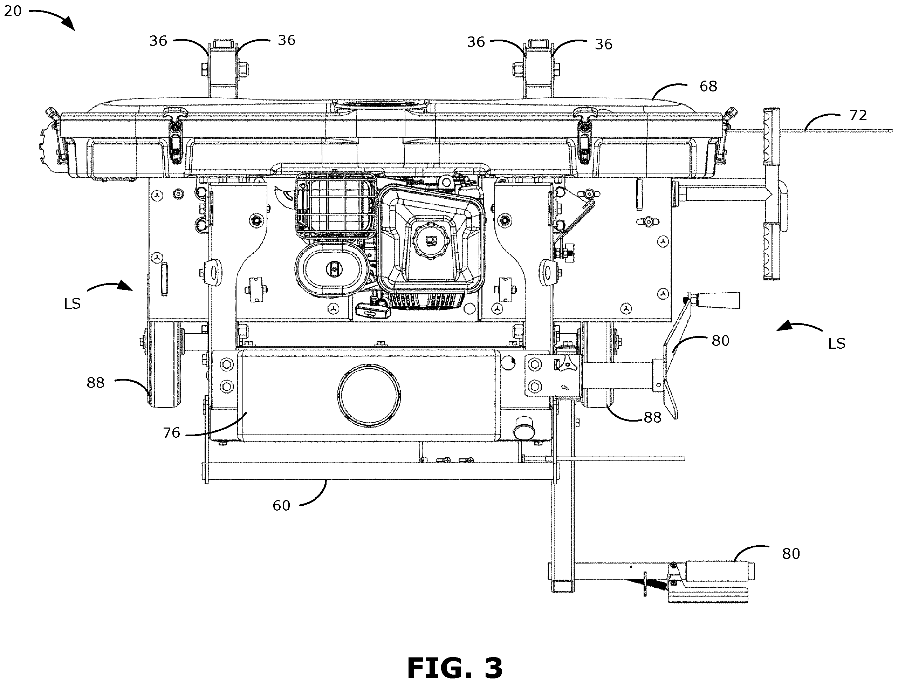

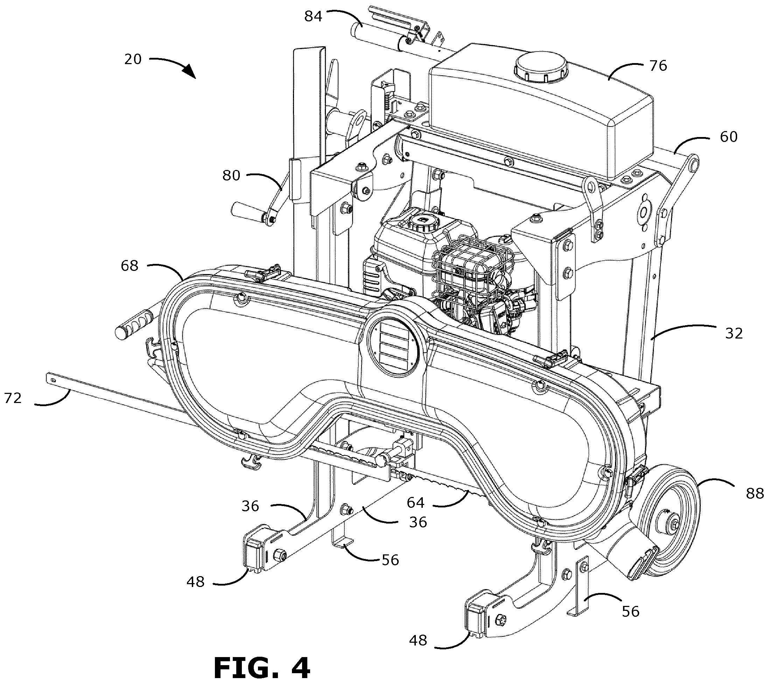

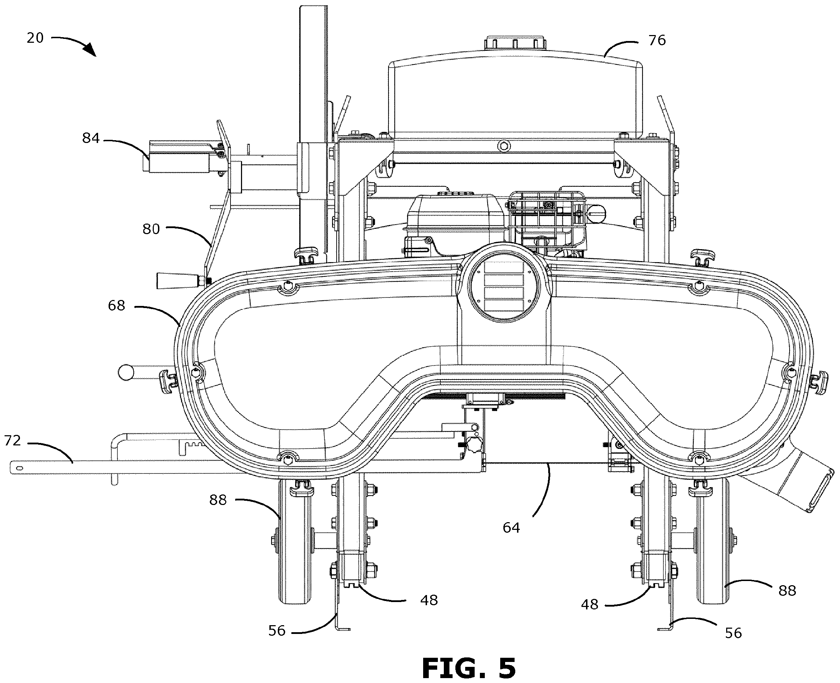

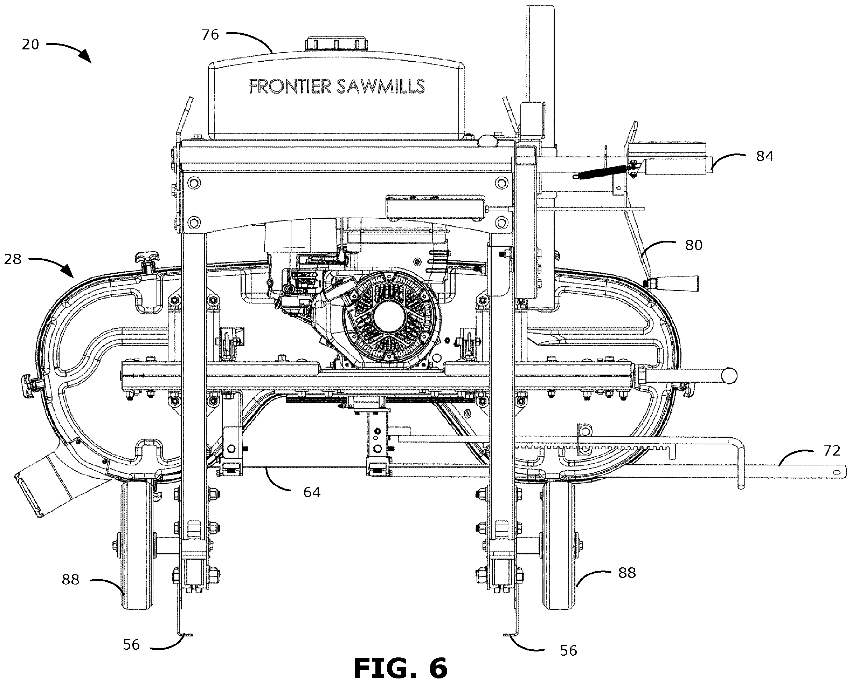

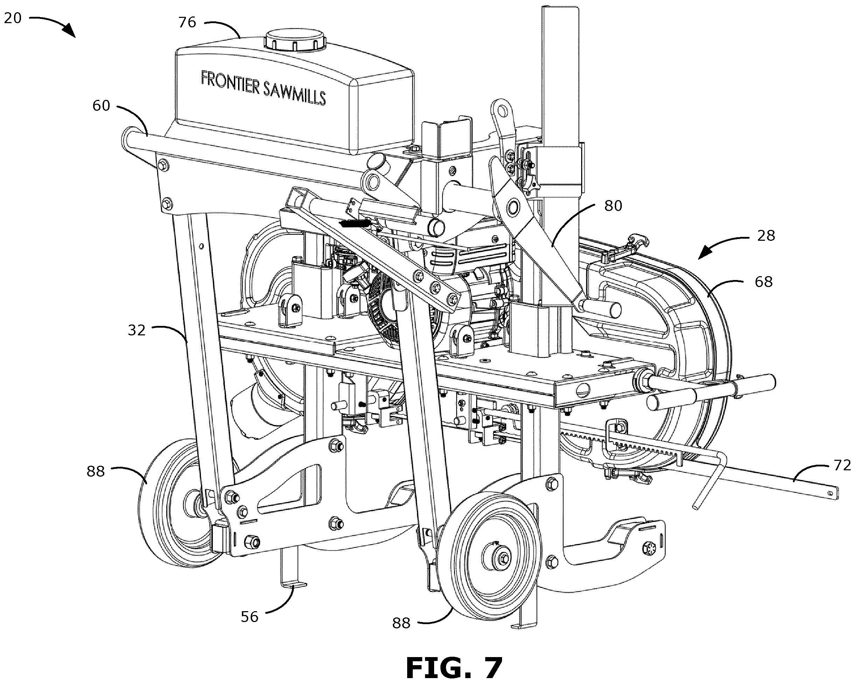

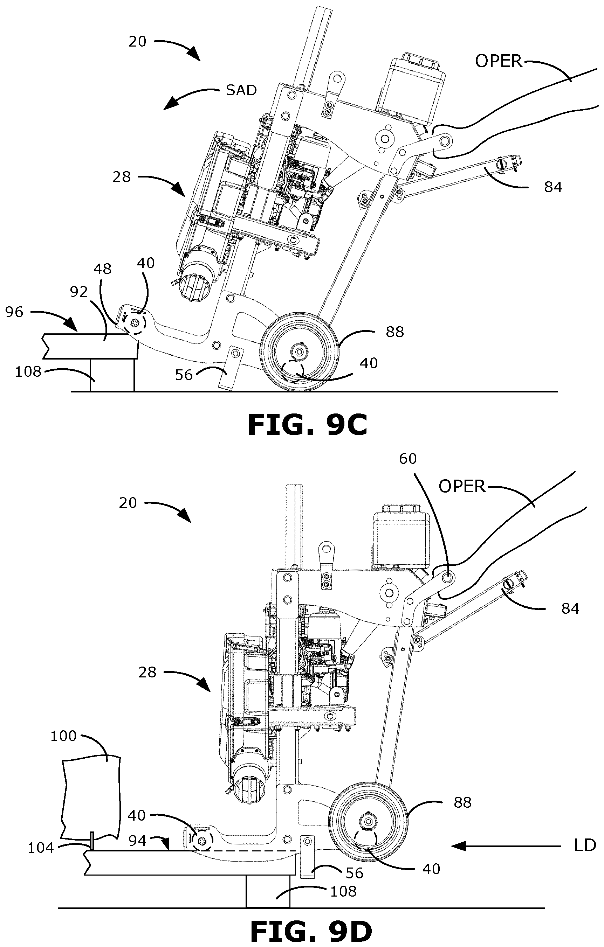

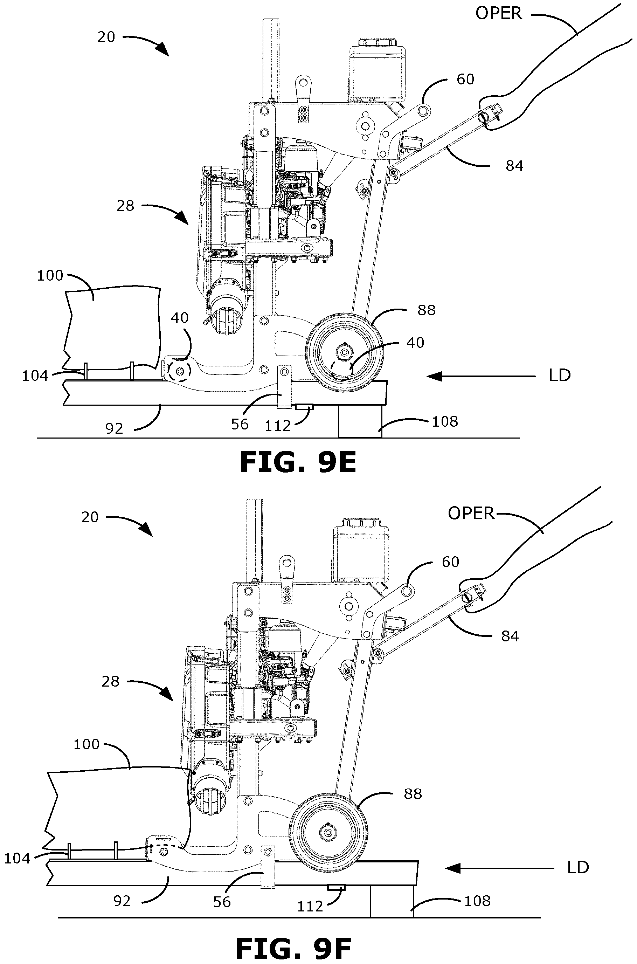

FIGS. 1 to 8 show a sawmill carriage 20 of a sawmill system in accordance with an exemplary embodiment. The sawmill carriage 20 includes a frame 24 that supports a sawmill head 28. The frame 24 is configured to be removably mounted on a pair of rails 92 (see FIG. 9E) of a log support structure of the sawmill system to position the sawmill head 28 to cut a log 100 positioned on the log support structure 96 (see FIG. 9C) as the sawmill carriage 20 moves along the rails. The design allows for the sawmill system to be readily relocated by configuring the sawmill carriage to be easily mountable and dismountable on the rails 92 and relocatable once dismounted from the rails. The frame 24 is constructed to support the weight of the sawmill head 28 in a position to receive and cut a log that the sawmill carriage 20 is moved towards along the rails. In particular, two sets of vertical members 32, 34 of the frame 24 are positioned towards lateral sides LS of the frame 24, and extend vertically to elevate the sawmill head 28. A chassis is positioned towards a lower vertical end LVE of the frame 24 and includes a pair of plate members 36 secured to each lateral sides of the vertical members 32,34 towards each lateral side LS of the frame 24 to sandwich the vertical members 32,34.

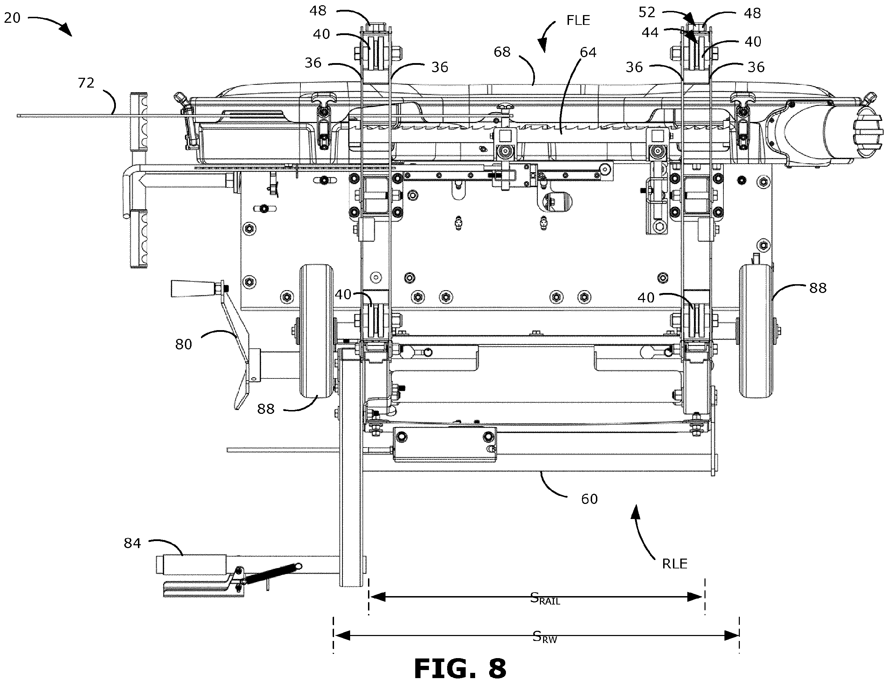

A first translation structure is connected to the plate members 36 towards a first lateral side LS of the frame 24, and a second translation structure is connected to the plate members 36 towards a second lateral side LS of the frame 24 opposite the first lateral side LS. The first and second translation structures facilitate travel of the sawmill carriage 20 along tracks 94 provided by upper surfaces of the rails 92 of a log support structure 96. In the illustrated embodiment, each of the first and second translation structures includes a pair of track wheels 40, one of which is rotatably connected to the frame 24 towards a rear longitudinal end RLE thereof, and another of which is rotatably connected to the frame 24 towards a front longitudinal end FLE thereof, as shown particularly in FIG. 8. The track wheels 40 can be made of any suitably durable material, such as, for example, a metal, a hard plastic or other polymer. The track wheels 40 have lateral shift limiting features to inhibit lateral movement of the track wheels 40 when mounted on the tracks 94 of the rails 92 of the log support structure 96. In the illustrated embodiment, the lateral shift limiting features include a circumferential groove 44 positioned to receive and engage a rib of the rails 92. A track sweeper 48 is positioned longitudinally forward of the track wheels 40, towards a front longitudinal end FLE of the frame 24, between the pair of plate members 36, and can be used to guide the track wheels 40 on or onto rails of a log support structure 96 and to clear the tracks 94 of debris from the sawing process so that travel of the track wheels 40 on the tracks 94 is unimpeded. The track sweeper 48 is constructed of some suitably durable material, such as, for example, a metal or an ultra-high molecular weight (UHMW) polyethylene (PE) that is highly resistant to wear and has a low coefficient of friction with various metals and other materials. A groove 52 (FIG. 1) in each track sweeper 48 is aligned with the circumferential grooves of the track wheels 40.

A retainer structure includes a carriage retainer 56 that is positioned toward each lateral side of the frame 24 to maintain the track wheels 94 of the sawmill carriage 20 in contact with the rails 92 when the sawmill carriage 20 is mounted on the log support structure 96. Further, the carriage retainers 56 are positioned to abut one or more stops along the rails 92 (e.g., one at each end of the desired travel range) when mounted atop of the rails to inhibit accidental dismounting of the sawmill carriage 20 from the rails 92. The retainer structure is preferably positioned between the pairs of track wheels 40 along the longitudinal axis LA. By maintaining the track wheels 40 in contact with the rails 92, generally planar cuts can be made with the saw blade as the sawmill carriage 20 travels along a plane, and inadvertent dismounting of the sawmill carriage 20 from the log support structure 96 can be avoided. In this embodiment, the carriage retainer 56 includes an L-shaped bracket that is bolted onto at least one of the plate members 36 towards each lateral side LS of the frame 24. The carriage retainers 56 are separate elements that are removably coupled to the chassis to facilitate mounting and dismounting of the sawmill carriage 20 on the log support structure 96.

The frame 24 includes a handle in the form of a handlebar 60 positioned towards a rear longitudinal end RLE thereof opposite the front longitudinal end FLE thereof, and towards an upper vertical end UVE thereof. In the illustrated embodiment, the handlebar 60 is a bar that extends generally between the lateral sides LS of the frame 24.

The sawmill head 28 is connected and secured to the frame 24 and positioned between each pair of track wheels 40 along a longitudinal axis LA of the sawmill carriage. A bandsaw blade 64 of the sawmill head 28 is mounted around a pair of pulleys (not shown), at least one of which is driven by a motor (also not shown). The pulleys and the motor are enclosed in a sawmill case having a blade guard cover 68 that is removably attached to facilitate servicing of the sawmill. A blade guard plate 72 is slidable laterally to alternatively expose or cover the bandsaw blade 64. The motor of the sawmill head 28 is, in this embodiment, gas operated, and a lubricant tank 76 is mounted on the frame 24 to provide lubricant to the sawmill head motor.

The frame 24 includes a vertically adjustable sawmill head mount that can be moved upwards or downwards along the vertical members 32, 34 via a lift crank handle 80. Manual operation of the lift crank handle 80 enables vertical adjustment of the position of the sawmill head mounted on the sawmill head mount to facilitate cutting along different vertical planes to cut planks from a log.

A control in the form of a push handle 84 extending from the frame 24 enables manual forward and backward movement of the sawmill carriage 20 along the rails 92, and controlling of the operation of the sawmill head motor.

A pair of transportation wheels 88 for facilitating transportation of the sawmill carriage, when off the rails, are rotatably coupled to the chassis of the frame 24 towards the rear longitudinal end RLE thereof. In particular, the transportation wheels 88 are coupled to laterally external the plate members 36 to position the transportation wheels laterally away from a log support structure 96 when the sawmill carriage is positioned thereon. The transportation wheels 88 can be made of any suitable material, such as, for example, a rubber or elastic polymer. A spacing S_{RELW} between the transportation wheels 88 is greater than the width of the combination of the rails 92, enabling the transportation wheels 88 to be positioned laterally outside of the rails 92. The position of the transportation wheels 88 enables positioning of the frame 24 over of the transportation wheels 88 when the sawmill carriage 20 is tilted, as will be described below.

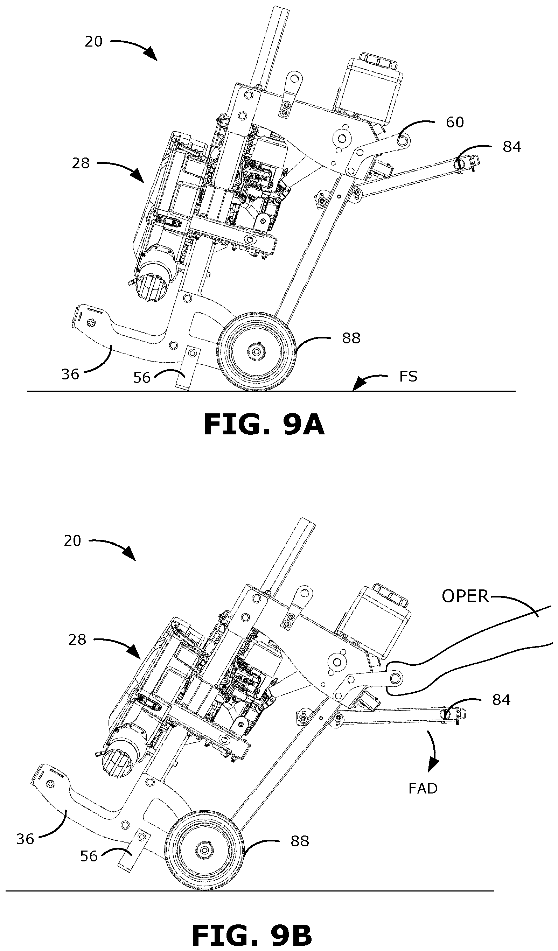

FIG. 9A shows the sawmill carriage 20 resting on a flat surface FS. The sawmill carriage 20 is supported by the transportation wheels 88 and the carriage retainers 56. In this orientation, the center of mass of the sawmill carriage is positioned laterally and longitudinally between the transportation wheels 88 and the carriage retainers 56.

In order to relocate the sawmill carriage 20 or mount the sawmill carriage 20 on rails, the handlebar 60 of the sawmill carriage 20 can be grasped and moved (that is, tilted or pivoted about the transportation wheels 88 in a first angular direction FAD) to position the weight of the sawmill carriage 20 over the transportation wheels 88 in a transportation orientation, as is shown in FIG. 9B. In the transportation orientation, the sawmill carriage 20 can be readily repositioned at another location simply by rolling the sawmill carriage 20 via the handlebar 60.

When it is desired to mount the sawmill carriage 20 on rails 92 of a log support structure 96 that extend in the longitudinal direction LD, the sawmill carriage 20 is tilted by an operator OPER to position the track sweeper 48 and/or the front track wheels 40 atop of a corresponding one of the rails 92, as shown in FIG. 9C. The sawmill carriage 20 is then lifted by the handlebar 60 when supported by the track sweeper 48 and/or the front track wheels 40 on the rails 92 in a second angular direction SAD until the rear track wheel 40 of each pair of track wheels 40 is at the elevation of the rails 92. The sawmill carriage 20 is then translated forward, as shown in FIG. 9D. Continued translation of the sawmill carriage 20 along the rails 92 in the longitudinal direction LD causes the carriage retainers 56 to be positioned around the rails 92, and the second of the pair of track wheels 40 on each lateral side can be positioned on the rails 92, as is shown in FIG. 9E. Also shown in front of the sawmill carriage 20 is a log 100 to be sawn positioned on log support crossbunks 104. The log support crossbunks 104 are connected securely to the rails 92, and span between them. Features of the log support crossbunks 104 are configured to support the log 100 and inhibit lateral or longitudinal movement of the log 100 when placed thereon and being sawn into planks. The log support structure 96 can be mounted on a base 108 to elevate the log support structure 96 as desired. By elevating the rails 92 of the log support structure 96, travel of the carriage retainers 56 can occur unimpededly.

Once the sawmill carriage 20 is mounted on the rails 92 and positioned sufficiently forward, a stop 112 can optionally be secured to the rails 92 by any suitable means to inhibit travel of the sawmill carriage 20 back off of the log support structure 96. Alternatively, a block of sufficient height can be positioned under the rails to inhibit backwards travel of the carriage retainers 56 and, thus, the sawmill carriage 20.

The sawmill carriage 20 can then be rolled forward on the track wheels 40 to move the bandsaw blade towards the log 100 to be cut as shown in FIG. 9F. The height of the sawmill head 28 and, thus, the bandsaw blade 64 can be adjusted as desired to cut a plank of a desired thickness. Forward movement in the longitudinal direction LD can be achieved by manually grasping the push handle 84 of the sawmill carriage 20 and pushing the sawmill carriage 20 in that direction. Once the cut is performed, the sawmill carriage 20 can be rolled backwards along the rails back to a position in a work orientation in which the pairs of track wheels 40 are mounted on the rails 92, such as that shown in FIG. 9E, to prepare for the next cut, such as, for example, by adjusting the height of the bandsaw blade 64.

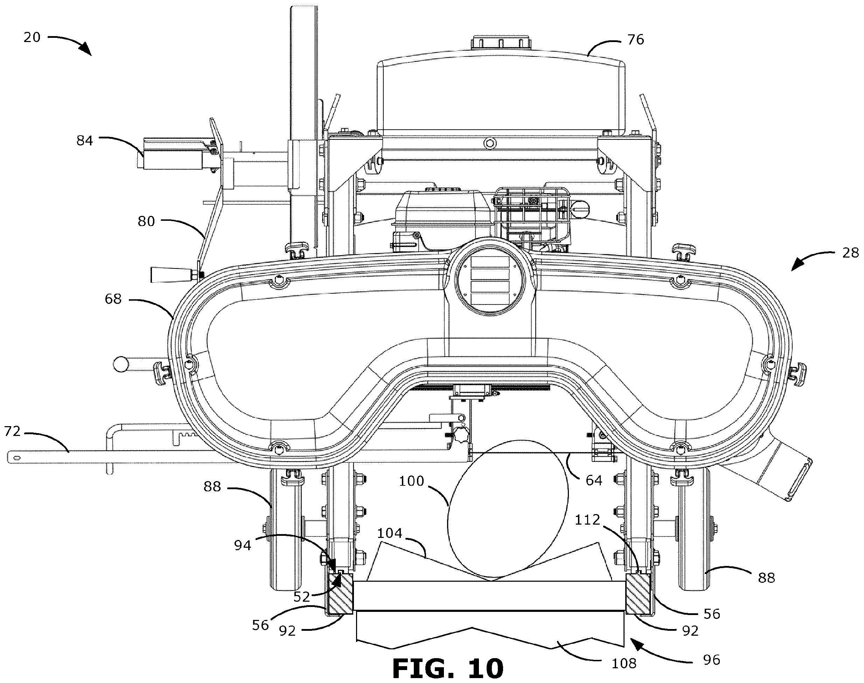

FIG. 10 shows the sawmill carriage 20 mounted on the rails 92 of the log support structure 96, showing the longitudinal rib 112 of each rail 92 that is received in the groove 52 of the track sweeper 48 and the circumferential groove of a corresponding one of the track wheels 40. The rails 92 have a flat surface FS along which the track wheels 40 can travel along the tracks 94 of the rails 92. A portion of the bandsaw blade 64 is shown being exposed by retraction of the blade guard plate 72 and positioned to receive a log positioned on the log support structure when the first translation structure and the second translation structure are mounted on the first rail and the second rail, respectively, and the sawmill carriage travels in the longitudinal direction. It will be understood that, while the blade guard plate 72 is shown partially exposing the bandsaw blade 64, in normal operation, the blade guard plate 72 is fully retracted to expose the full bandsaw blade extending between lobes of the sawmill housing.

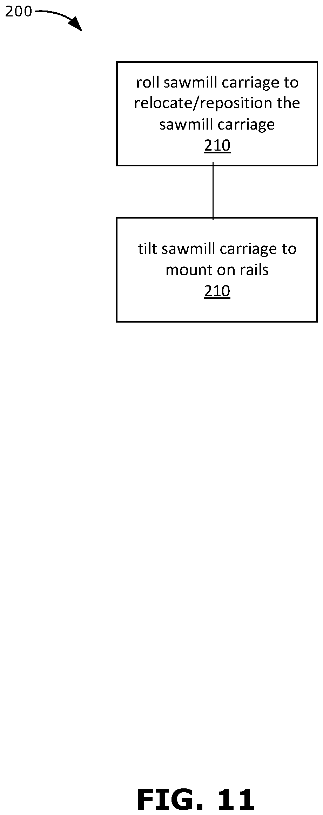

FIG. 11 shows a general method 200 of using the sawmill carriage of FIGS. 1 to 8. The method 200 commences with the rolling of the sawmill carriage on the transportation wheels to relocate/reposition the sawmill carriage (210). The sawmill carriage can be relocated to move it towards a log support structure where lumber is to be cut into planks, and is illustrated generally in FIG. 9B. The sawmill carriage is tilted to mount the sawmill carriage on rails of a log support structure (220). This is exemplified in FIGS. 9C and 9D. First, the sawmill carriage is tilted in a first angular direction FAD to raise the front longitudinal end above the rails of the log support structure. Then the sawmill carriage is tilted in a second angular direction SAD to elevate its rear longitudinal end so that the sawmill carriage can be mounted on the rails. The carriage can then be used to mill logs as illustrated generally in FIG. 9E and 9F.

As will be readily clear from the description above and the attached drawings, in order to remove the sawmill carriage from the log support structure to relocate the sawmill carriage 20 and possibly the log support structure 96, the steps of mounting the sawmill carriage 20 on the log support structure 96 are reversed.

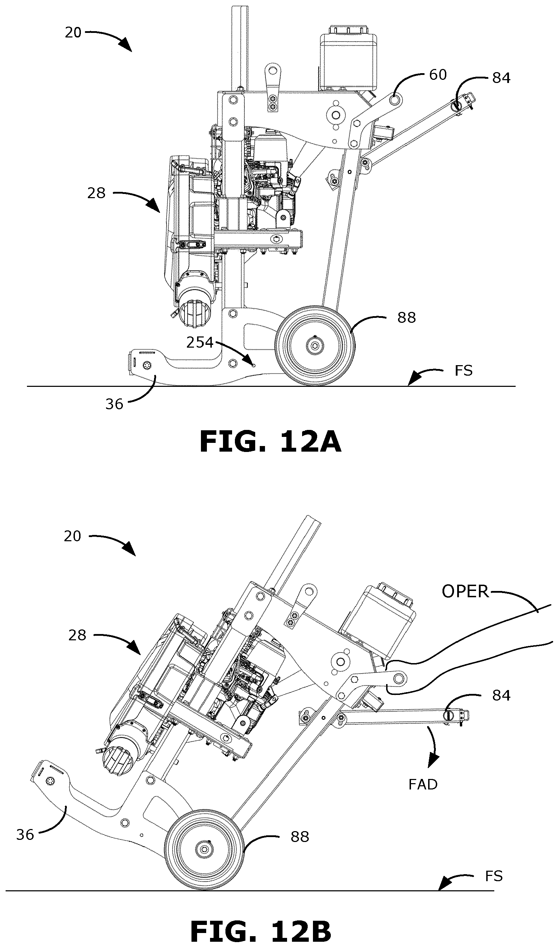

FIGS. 12A to 12F show another method of mounting and dismounting the sawmill carriage 20 of FIGS. 1 to 8 on the log support structure in which the carriage retainers 56 are removed when the sawmill carriage 20 is not mounted on the rails 92 of the log support structure 96. A securement aperture 254 is shown being empty where the carriage retainer 56 can be attached via a bolt.

FIG. 12A shows the sawmill carriage 20 resting on a flat surface FS. The sawmill carriage 20 is supported by the transportation wheels 88 and the plate members 36 of the frame 24. In this orientation, the center of mass of the sawmill carriage is positioned laterally and longitudinally between the transportation wheels 88 and the plate members 36.

In order to relocate the sawmill carriage 20 or mount the sawmill carriage 20 on rails, the handlebar 60 of the sawmill carriage 20 can be grasped to tilt or pivot sawmill carriage 20 about the transportation wheels 88 in a first angular direction FAD) to position the weight of the sawmill carriage 20 over the transportation wheels 88 in a transportation orientation, as is shown in FIG. 12B. In the transportation orientation, the sawmill carriage 20 can be readily repositioned at another location simply by rolling the sawmill carriage 20 via the handlebar 60.

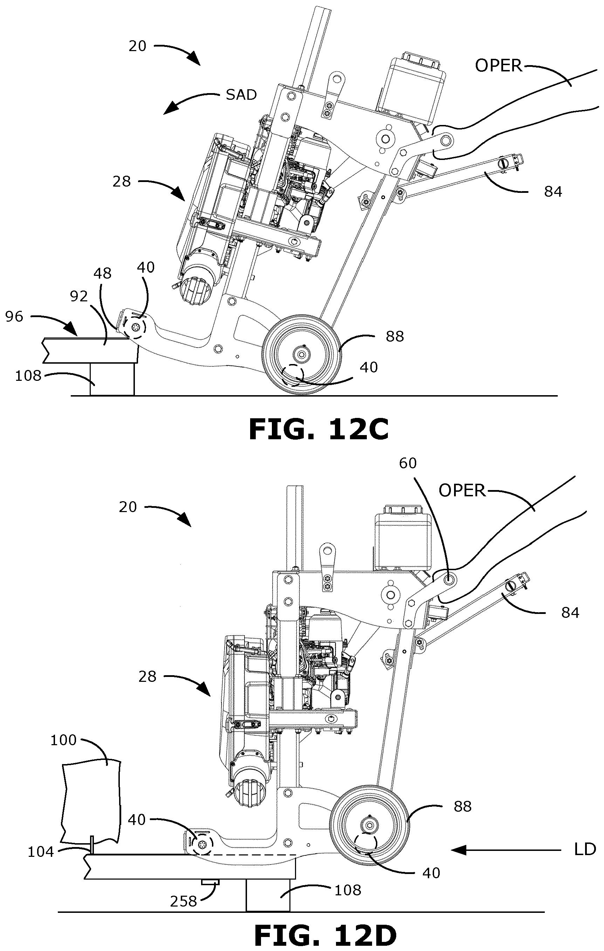

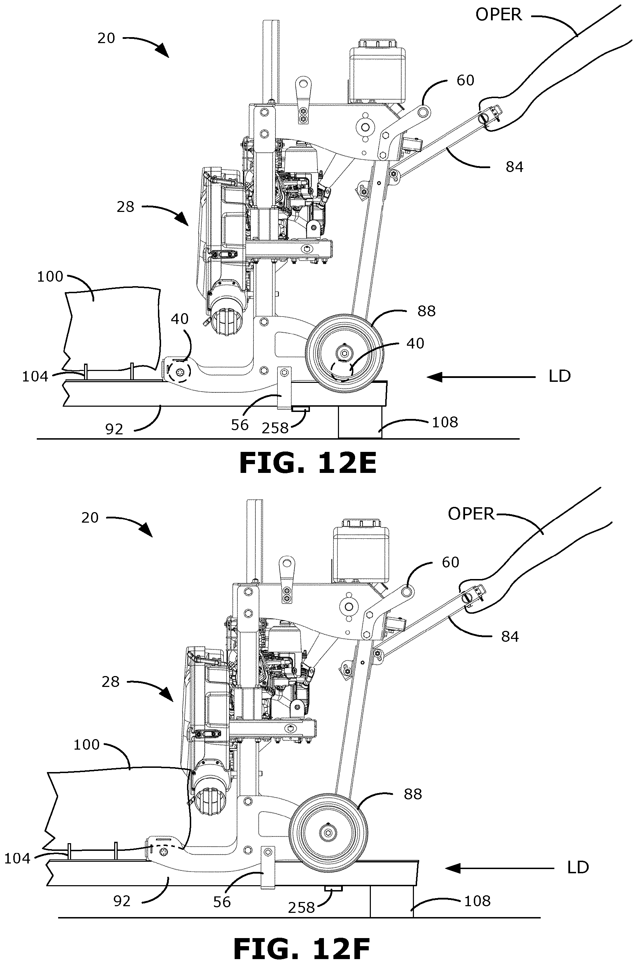

When it is desired to mount the sawmill carriage 20 on rails of 92 of a log support structure 96 that extend in the longitudinal direction LD, the sawmill carriage 20 is tilted by an operator OPER to position the track sweeper 48 and/or the front track wheels 40 atop of a corresponding one of the rails 92, as shown in FIG. 12C. The sawmill carriage 20 is then lifted by the handlebar 60 when supported by the track sweeper 48 and/or the front track wheels 40 on the rails 92 in a second angular direction SAD until the rear track wheel 40 of each pair of track wheels 40 is at the elevation of the rails 92. The sawmill carriage 20 is then translated forward, as shown in FIG. 12D. Continued translation of the sawmill carriage 20 along the rails 92 in the longitudinal direction LD causes the second of the pair of track wheels 40 on each lateral side can be positioned on the rails 92, as is shown in FIG. 12E. In addition, when the securement apertures 254 have been moved past a stop 258 secured to the rails 92, the carriage retainers 56 can be secured to the plate members 36 via the securement apertures 254 to secure the sawmill carriage 20 to the log support structure 96. Abutment of the carriage retainers 56 with the stop 258 limits backward travel of the sawmill carriage 20 on the rails 92 to thereby inhibit accidental dismounting of the sawmill carriage 20 off of the log support structure 96.

The sawmill carriage 20 can then be rolled forward on the track wheels 40 to move the bandsaw blade towards the log 100 to be cut as shown in FIG. 12F. The height of the sawmill head 28 and, thus, the bandsaw blade 64 can be adjusted as desired to cut a plank of a desired thickness. Forward movement in the longitudinal direction LD can be achieved by manually grasping the push handle 84 of the sawmill carriage 20 and pushing the sawmill carriage 20 in that direction. Once the cut is performed, the sawmill carriage 20 can be rolled backwards along the rails back to a position in a work orientation in which the pairs of track wheels 40 are mounted on the rails 92, such as that shown in FIG. 12E, to prepare for the next cut, such as, for example, by adjusting the height of the bandsaw blade 64.

FIG. 10 shows the sawmill carriage 20 mounted on the rails 92 of the log support structure 96, showing the longitudinal rib 112 of each rail 92 that is received in the groove 52 of the track sweeper 48 and the circumferential groove of a corresponding one of the track wheels 40. The rails 92 have a flat surface FS along which the track wheels 40 can travel along the tracks 94 of the rails 92. A portion of the bandsaw blade 64 is shown being exposed by retraction of the blade guard plate 72 and positioned to receive a log positioned on the log support structure when the first translation structure and the second translation structure are mounted on the first rail and the second rail, respectively, and the sawmill carriage travels in the longitudinal direction. It will be understood that, while the blade guard plate 72 is shown partially exposing the bandsaw blade 64, in normal operation, the blade guard plate 72 is fully retracted to expose the full bandsaw blade extending between lobes of the sawmill housing.

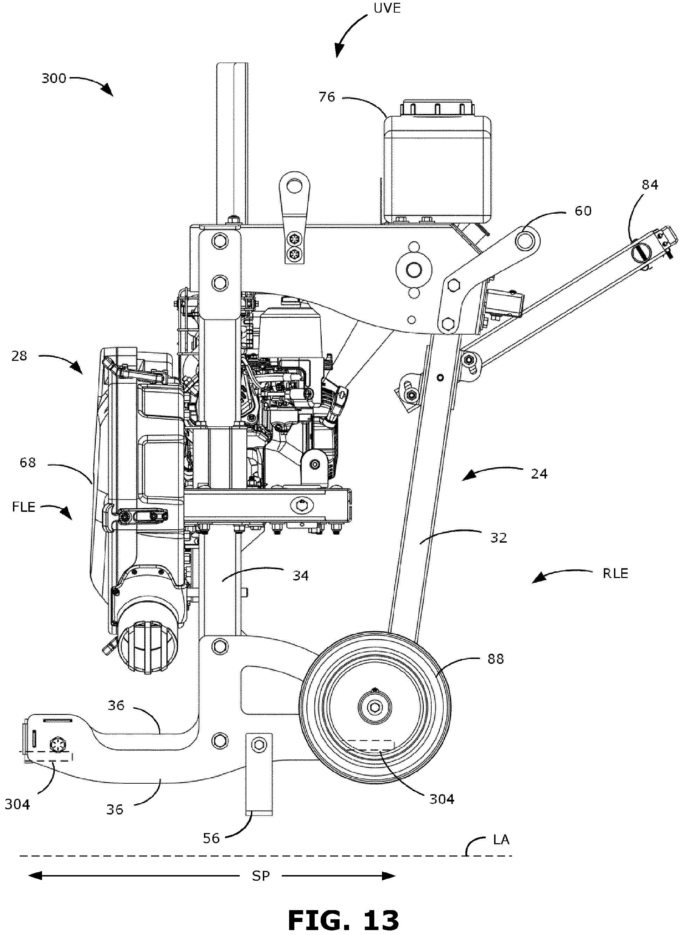

FIG. 13 shows a sawmill carriage 300 in accordance with an alternative embodiment, in which the first and second translation structures include a pair of slide members 304. In particular, the slide members 304 in this embodiment replace the longitudinally elongated track sweepers of the embodiment shown in FIGS. 1 to 8. The slide members 304 can be made of any suitable material, such as, for example, UHMW PE. Each of the rails has at least a planar surface forming a track upon which the first glide pad and the second glide pad are positionable, respectively, and wherein each of the first slide member and the second slide member have a low coefficient of friction with the first rail and the second rail respectively

In various embodiments, the retainer structure is positioned along a span SP of the longitudinal axis along which the translation structures contact the tracks, as shown in FIG. 13.

In other embodiments, lateral movement of the sawmill carriage can be inhibited by other structures. For example, the transportation wheels 88 can be separated by a gap that is approximately equal to the width of the log support structure rails and can thus the transportation wheels can limit lateral movement when the sawmill carriage is mounted on the rails. Any other suitable lateral movement inhibition structure can be employed.

While, in the above-described and illustrated embodiments, the tracks are provided by the rails that have a distinct structure in comparison to the remainder of the log support structure, in some other embodiments, the tracks can be provided in a number of manners, take a number of other forms. For example, the tracks can be provided by lateral portions of a plate upon which a log engaging structure is positioned. In another alternative embodiment, the tracks can be toothed, and the sawmill carriage can have translation structures in the form of cogs with corresponding toothed circumferences.

While, in the above-described and illustrated embodiments, the sawmill carriage has a single handle for relocating and tilting the sawmill carriage, in other embodiments, the sawmill carriage can have two or more handles that, in combination or alternatively, perform the same function.

While, in the above-described and illustrated embodiments, the sawmill carriage has a bandsaw blade, in other embodiments, the sawmill carriage can have a different blade, for example, a chainsaw blade, to perform the same function.

The steps (also referred to as operations) in the flowchart and drawings described herein are for purposes of example only. There may be many variations to these steps/operations without departing from the teachings of the present disclosure. For instance, the steps may be performed in a differing order, or steps may be added, deleted, or modified, as appropriate.

While, in the above-described and illustrated embodiments, the sawmill carriages include two transportation wheels, in other embodiments, the sawmill carriage can include more than two transportation wheels or even a single roller that acts as a wheel.

### General

Although the systems, devices and processes disclosed and shown herein may comprise a specific plurality of elements, the systems, devices and assemblies may be modified to comprise additional or fewer of such elements. Although several example embodiments are described herein, modifications, adaptations, and other implementations are possible. For example, substitutions, additions, or modifications may be made to the elements illustrated in the drawings, and the example methods described herein may be modified by substituting, reordering, or adding steps to the disclosed methods.

Features from one or more of the above-described embodiments may be selected to create alternate embodiments comprised of a sub-combination of features which may not be explicitly described above. In addition, features from one or more of the above-described embodiments may be selected and combined to create alternate embodiments comprised of a combination of features which may not be explicitly described above. Features suitable for such combinations and subcombinations would be readily apparent to persons skilled in the art upon review of the present disclosure as a whole.

In addition, numerous specific details are set forth to provide a thorough understanding of the example embodiments described herein. It will, however, be understood by those of ordinary skill in the art that the example embodiments described herein may be practiced without these specific details. Furthermore, well-known methods, procedures, and elements have not been described in detail so as not to obscure the example embodiments described herein. The subject matter described herein and in the recited claims intends to cover and embrace all suitable changes in technology.

The present invention may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. The scope of the claims should not be limited by the embodiments set forth in the examples, but should be given the broadest interpretation consistent with the description as a whole.

## Claims

1. A sawmill carriage (20, 300), comprising:
a frame (24) having a handle (60);
a first translation structure connected to the frame (24) towards a first lateral side (LS) thereof, and a second translation structure connected to the frame (24) towards a second lateral side (LS) thereof opposite the first lateral side (LS), the first translation structure being configured to be mounted on a first rail (92) of a log support structure (96), the second translation structure being configured to be mounted on a second rail (92) of the log support structure (96), the log support structure (96) being configured to support a log (100), the first rail (92) and the second rail (92) extending in a longitudinal direction (LD) and enabling travel of the sawmill carriage (20, 300)in the longitudinal direction (LD) when the first translation structure and the second translation structure are mounted on the first rail (92) and the second rail (92), respectively;
a sawmill head (28) secured to the frame (24), the sawmill head (28) having a saw blade (64), a portion of the saw blade (64) being positionable to cut the log (100) positioned on the log support structure (96) when the first translation structure and the second translation structure are mounted on the first rail (92) and the second rail (92), respectively, and the sawmill carriage (20, 300) travels in the longitudinal direction (LD); and
a pair of transportation wheels (88) rotatably connected to the frame (24) towards a first longitudinal end (RLE) thereof,
wherein the handle (60) is positioned to enable tilting and/or transportation of the sawmill carriage (20, 300) when the sawmill carriage (20, 300) is resting on the pair of transportation wheels (88).

2. A sawmill carriage (20) according to claim 1, wherein the first translation structure includes a first pair of track wheels (40) rotatably connected to the frame (24), and the second translation structure includes a second pair of track wheels (40) rotatably connected to the frame (24), and wherein each of the first rail (92) and the second rail (92) have at least a planar surface (FS) upon which the first pair of track wheels (40) and the second pair of track wheels (40) are mountable, respectively.

3. A sawmill carriage (20) according to claim 2, wherein at least one of each of the first pair of track wheels (40) and at least one of the second pair of track wheels (40) is positioned towards a second longitudinal end (FLE) of the frame (24) opposite the first longitudinal end (RLE).

4. A sawmill carriage (20) according to claim 2 or 3, wherein the frame (24) includes a pair of plate members (36) towards the first lateral side (LS) thereof between which the first pair of track wheels (40) is rotatably mounted.

5. A sawmill carriage (300) according to claim 1, wherein the first translation structure includes a first slide member (304), and the second translation structure includes a second slide member (304), and wherein each of the first rail (92) and the second rail (92) has at least a planar surface (FS) upon which the first slide member (304) and the second slide member (304) are mountable, respectively.

6. A sawmill carriage (20, 300) according to any one of claims 1 to 5, wherein a retainer structure (56) is positioned or positionable along the frame (24) along a span (SP) of a longitudinal axis (LA) along which the first translation structure and the second translation structure contact the first rail (92) and the second rail (92), respectively, to abut a stop (112, 258) connected to the first rail (92) and/or the second rail (92) to inhibit accidental dismounting of the sawmill carriage (20, 300) from the log support structure (96) when the sawmill carriage (20, 300) is mounted on the log support structure (96),
preferably wherein the retainer structure (56) includes a first L-shaped bracket positioned towards the first lateral side (LS) of the frame (24) and a second L-shaped bracket positioned towards the second lateral side (LS) of the frame (24),
preferably wherein the first L-shaped bracket and the second L-shaped bracket are removably coupled to the frame (24).

7. A sawmill carriage (20, 300) according to any one of claims 1 to 6, wherein a spacing (S_{RW}) between the pair of transportation wheels (88) is greater than a width between the first rail (92) and the second rail (92).

8. A sawmill carriage kit for a sawmill carriage (20, 300), comprising:
a frame (24) having a handle (60);
a first translation structure connected or connectable to the frame (24) towards a first lateral side (LS) thereof, and a second translation structure connected or connectable to the frame (24) towards a second lateral side (LS) thereof opposite the first lateral side (LS), the first translation structure being configured to be mounted on a first rail (92) of a log support structure (96) when connected to the frame (24) and the second translation structure being configured to be mounted on a second rail (92) of the log support structure (96) when connected to the frame (24), the log support structure (96) being configured to support a log (100), the first rail (92) and the second rail (92) extending in a longitudinal direction (LD) and enabling travel of the sawmill carriage (20, 300) in the longitudinal direction (LD) when the first translation structure and the second translation structure are mounted on the first rail (92) and the second rail (92), respectively;
a sawmill head (28) of the sawmill carriage (20, 300) secured or securable to the frame (24), the sawmill head (28) having a saw blade (64), a portion of the saw blade (64) being positionable to cut the log (100) positioned on the log support structure (96) when the first translation structure and the second translation structure are mounted on the first rail (92) and the second rail (92), respectively, and the sawmill carriage (20, 300) travels in the longitudinal direction (LD); and
a pair of transportation wheels (88) rotatably connected or connectable to the frame (24) towards a first longitudinal end (RLE) thereof,
wherein the handle (60) is positioned to enable tilting and/or transportation of the sawmill carriage (20, 300) when the sawmill carriage (20, 300) is resting on the pair of transportation wheels (88).

9. A sawmill carriage kit according to claim 8, wherein the first translation structure includes a first pair of track wheels (40) rotatably connected or connectable to the frame (24), and the second translation structure includes a second pair of track wheels (40) rotatably connected or connectable to the frame (24), and wherein each of the first rail (92) and the second rail (92) have at least a planar surface (FS) upon which the first pair of track wheels (40) and the second pair of track wheels (40) are mountable, respectively, when the sawmill carriage (20) is assembled,
preferably wherein at least one of each of the first pair of track wheels (40) and at least one of the second pair of track wheels (40) is positioned or positionable towards a second longitudinal end (FLE) of the frame (24) opposite the first longitudinal end (RLE),
preferably wherein the frame (24) includes a pair of plate members (36) towards the first lateral side (LS) thereof between which the first pair of track wheels (40) is rotatably mounted or mountable,

10. A sawmill carriage kit according to claim 8 or 9, wherein a retainer structure (56) is positioned or positionable along the frame (24) along a span (SP) of a longitudinal axis along which the first translation structure and the second translation structure contact the first rail (92) and the second rail (92), respectively, to abut a stop (112, 258) connected to the first rail (92) and/or the second rail (92) to inhibit accidental dismounting of the sawmill carriage (20) from the log support structure (96) when the sawmill carriage (20) is mounted on the log support structure (96),
preferably wherein the retainer structure (56) includes a first L-shaped bracket positioned or positionable towards the first lateral side (LS) of the frame (24) and a second L-shaped bracket positioned or positionable towards the second lateral side (LS) of the frame (24),
preferably wherein the first L-shaped bracket and the second L-shaped bracket are removably coupled or coupleable to the frame (24).

11. A method (200) of using a sawmill carriage, comprising:
rolling the sawmill carriage (20) via a handle (60) of a frame (24) of the sawmill carriage (20) on a pair of transportation wheels (88) rotatably connected to the frame (24), the handle (60) and the pair of transportation wheels (88) being positioned towards a first longitudinal end (RLE) of the frame (24), the sawmill carriage (20) having a first translation structure connected to the frame (24) towards a first lateral side (LS) thereof, the sawmill carriage (20) having a second translation structure connected to the frame (24) towards a second lateral side (LS) thereof opposite the first lateral side (LS), the sawmill carriage (20) having a sawmill head (28) secured to the frame (24), the sawmill head (28) having a saw blade (64), a portion of the saw blade (64) being exposed and positioned to cut a log (100) positioned on a log support structure (96) when the first translation structure and the second translation structure are mounted on a first rail (92) and a second rail (92) of the log support structure (96), respectively, the first rail (92) and the second rail (92) extending in a longitudinal direction (LD) to enable travel of the sawmill carriage (20) in the longitudinal direction (LD) when the first translation structure and the second translation structure are mounted on the first rail (92) and the second rail (92), respectively; and
tilting the sawmill carriage (20) via the handle (60) to mount the first translation structure and the second translation structure on the first rail (92) and the second rail (92), respectively.

12. A method according to claim 11, wherein the frame (24) includes a first track sweeper (48) and a second track sweeper (48), the first track sweeper and the second track sweeper being positioned towards a second longitudinal end (FLE) of the frame (48) opposite the first longitudinal end (RLE) to guide the first translation structure and the second translation structure on or onto the first rail (92) and the second rail (92), and wherein tiling the sawmill carriage (20) includes positioning the first track sweeper (48) on the first rail (92) and positioning the second track sweeper (48) on the second rail (92).

13. A method according to claim 11 or 12, wherein the first translation structure includes a first pair of track wheels (40) rotatably connected to the frame (24), and the second translation structure includes a second pair of track wheels (40) rotatably connected to the frame (24), and wherein each of the first rail (92) and the second rail (92) have at least a planar surface (FS) upon which the first pair of track wheels (40) and the second pair of track wheels (40) are mountable, respectively.

14. A method according to claim 13, wherein the frame (24) includes a pair of plate members (36) towards the first lateral side thereof (LS) between which the first pair of track wheels (40) is rotatably mounted.

15. A method according to any one of claims 11 to 14, wherein a retainer structure (56) is positioned or positionable along the frame (24) along a span (SP) of a longitudinal axis along which the first translation structure and the second translation structure contact the first rail (92) and the second rail (92), respectively, to abut a stop (112, 258) connected to the first rail (92) and/or the second rail (92) to inhibit accidental dismounting of the sawmill carriage (20) from the log support structure (96) when the sawmill carriage (20) is mounted on the log support structure (96),
preferably wherein the retainer structure (56) includes a first L-shaped bracket positioned or positionable towards the first lateral side (LS) of the frame (24) and a second L-shaped bracket positioned or positionable towards the second lateral side (LS) of the frame (24).
preferably the method further comprising coupling the retainer structure (56) to the frame (24) upon mounting the sawmill carriage (20) on the first rail (92) and the second rail (92).
